# EUROPEAN PATENT APPLICATION

(11) **EP 4 516 626 A1**
(43) Date of publication of application: **05.03.2025**
(21) Application number: 23925973.2
(22) Date of filing: 27.09.2023
(51) Int. Cl.: B61L 27/40, B61L 25/04

(54) **FIXED MARSHALLING AND DEPARTURE MARSHALLING ASSOCIATION METHOD AND SYSTEM**

(30) Priority: 03.03.2023 CN 202310196838
(71) Applicant: CRSC Research & Design Institute Group Co., Ltd., Beijing 100070 (CN)
(72) Inventor: LIU, Zhe, Beijing 100070 (CN); WU, Wangping, Beijing 100070 (CN); LIU, Yongzhuang, Beijing 100070 (CN); CHEN, Yi, Beijing 100070 (CN); NAN, Tongyu, Beijing 100070 (CN); LIU, Li, Beijing 100070 (CN)
(74) Representative: Samson & Partner Patentanwälte mbB
(86) International application number: PCT/CN2023/122248
(87) International publication number: WO 2024/183271

(57) **Abstract**

Disclosed by the disclosure are a method and system for associating a fixed marshalling with a departure marshalling. The method includes the following steps: respectively comparing data of the departure marshalling with data of the corresponding fixed marshalling before a shunting plan is executed, after the shunting plane is executed, and before departure to determine whether the departure marshalling conforms to the fixed marshalling, and performing early warning on the departure marshalling, and restricting the departure when the departure marshalling does not conform to the fixed marshalling. According to the disclosure, automatic comparison can be achieved, and whether the departure marshalling conforms to the fixed marshalling can be determined, thus improving the operation efficiency, effectively preventing errors and careless omissions, improving the operation efficiency, reducing the labor intensity, facilitating the improvement of the train marshalling efficiency, guaranteeing the train safety, improving the automatic train management level, assisting operators in improving the quality of fixed marshaling management, and further improving the transportation efficiency.

## Description

### TECHNCIAL FIELD

The disclosure relates to the technical field of train marshaling, and in particular to a method and system for associating a fixed marshalling with a departure marshalling, electronic equipment, and a storage medium.

### BACKGROUND ART

Heavy-haul railways, due to the characteristics of single source of goods, carload transportation, and less quantity of detaching, attaching, break-up and make-up, and so on, are often in fixed marshalling management of "passenger train", thus speeding up the turnround time of train group, reducing transit stay time and improving the efficiency of vehicle operation. The management of the fixed marshaling of heavy-haul trains means that a group of vehicles are numbered in a fixed manner, the vehicle models and the total number of vehicles are fixed, and the regular inspection dates of all vehicles in the whole group are as consistent as possible. If there is no sudden vehicle failure, the whole train group will jointly undertake the transportation task and regular maintenance. At present, the vehicle fixed marshaling management system is used to achieve fixed marshaling management. The application is submitted by the station and audited by the management department with the information of vehicle regular inspection. After the approval, the data of the fixed marshaling is changed. In the fixed marshaling, all vehicles in the whole group are required to have the same vehicle model, and the regular inspection date should be consistent as much as possible, such that the whole group of vehicles can be overhauled at the same time, the number of times of detaching and attaching is reduced, and operating cost is saved.

In the prior art, both the management of the fixed marshalling of vehicles and the management of the departure marshalling of each train at departure time are achieved. The departure marshalling is the train marshalling of each train at actual departure time, and at present, the station management system is used to implement the management of the departure marshalling. When there is a need to change the marshalling, the station dispatcher or attendant will compile the shunting plan in the system and issue the plan to the shunting team for execution. After the train marshalling is changed, the vehicle number clerk can form a departure marshalling sequence table from the new train marshalling and send the table to the front station. The information contained in the train marshalling includes the total number, total weight, change length of the whole train, as well as the sequence, vehicle number, model, and self-weight of each vehicle in the train set. The vehicle number is the unique identification of the vehicle and is the most important information in the marshaling. The comparison between the fixed marshalling and the departure marshalling is to compare the vehicle numbers in the fixed marshalling with those in the departure marshalling. If the vehicle numbers are completely the same, it is considered that the departure marshalling conforms to the fixed marshalling, otherwise, it is considered that the departure marshalling does not conform to the fixed marshalling. However, the automatic comparison cannot be performed as the correlation between the fixed marshalling and the departure marshalling has not been established, and manual comparison is heavy in workload and prone to errors and omissions, making it difficult for the station to complete the comparison with the fixed marshalling before departure. That is, the train is dispatched before the station completes the comparison, the fixed marshalling is updated by manual operation according to the data of the departure marshaling after departure, resulting in the following problems: the fixed marshalling has not really played a role in restraining the departure marshalling, that is, the station can arrange the departure marshalling at will without constraints, resulting in generally low regular inspection consistency of vehicles in the departure marshalling, making it difficult for the whole group of vehicles to enter and leave the vehicle depot at the same time for maintenance in the future, which leads to the increase of a lot of shunting operations in the later period; after the change of departure marshalling, the fixed marshalling needs to be updated synchronously to keep their data consistent. However, this update work is manually operated by the station at present, it is difficult to ensure that there are no errors or careless omissions, which may cause errors or delayed update of the data of the fixed marshalling. If the low regular inspection consistency of the departure marshalling is applied to synchronous update of the train group, the regular inspection consistency of the fixed marshalling will be constantly lowered for a long time, which loses the significance of the management of the fixed marshalling. At present, as there is no correlation between the vehicle fixed marshalling management system and the station management system, it is impossible to achieve the automatic comparison between the departure marshalling and the fixed marshalling, and the manual comparison is heavy in workload and prone to errors and omissions, the above problems are caused.

### SUMMARY

The inventor makes the disclosure to solve the problems above. Through specific embodiments, a method and system for associating a fixed marshalling with a departure marshalling, electronic equipment, and a storage medium are provided.

In a first aspect, an embodiment of the disclosure provides a method for associating a fixed marshalling with a departure marshalling, including the following steps:
respectively comparing data of the departure marshalling with data of the corresponding fixed marshalling before a shunting plan is executed, after the shunting plane is executed, and before departure to determine whether the departure marshalling conforms to the fixed marshalling; and performing early warning on the departure marshalling, and restricting the departure when the departure marshalling does not conform to the fixed marshalling.

Specifically, the comparing data of the departure marshalling with data of the corresponding fixed marshalling to determine whether the departure marshalling conforms to the fixed marshalling includes the following step:
acquiring the data of the departure marshalling, comprising the total number of vehicles in the departure marshalling, and vehicle numbers of all vehicles;
determining corresponding fixed marshalling according to the departure marshalling;
acquiring the data of the fixed marshalling, comprising the total number of vehicles in the fixed marshalling, and vehicle numbers of all vehicles; and
comparing the total number of vehicles in the fixed marshalling with that in the departure marshalling, determining that the departure marshalling does not conform to the fixed marshalling when the total number of vehicles is different; determining that the departure marshalling does not conform to the fixed marshalling when the total number of vehicles is the same and at least one vehicle number in the departure marshalling is different from any vehicle number in the fixed marshalling; and determining that the departure marshalling conforms to the fixed marshalling when the total number of the vehicles is the same and all vehicle numbers in the departure marshalling are able to find the same value in the vehicle numbers in the fixed marshalling.

Specifically, the acquiring the data of the departure marshalling, including the total number of vehicles in the departure marshalling, and vehicle numbers of all vehicles, includes the following steps:
determining the total number of vehicles in the departure marshalling, and a sequence and a vehicle number of each vehicle according to a train number of the departure marshalling.

Specifically, the determining the corresponding fixed marshalling according to the departure marshalling includes the following step:
obtaining a train group number of the corresponding fixed marshalling according to a train group number which includes the train number of the departure marshalling; and
determining the corresponding fixed marshalling according to the train group number.

Specifically, the acquiring the data of the fixed marshalling which comprises the total number of vehicles in the fixed marshalling and vehicle numbers of all vehicles includes the following steps:
determining the total number of vehicles in the fixed marshalling, and a sequence and a vehicle number of each vehicle according to the train group number of the fixed marshalling.

Specifically, the train number of the departure marshalling, the total number of vehicles, and the sequence and the vehicle number of each vehicle are displayed. The train number of the corresponding fixed marshalling, the total number of vehicles, and the sequence and the vehicle number of each vehicle are displayed.

Specifically, a method for associating a fixed marshalling with a departure marshalling further includes the following steps:
transmitting a situation of determining whether the departure marshalling conforms to the fixed marshalling to a station management system;
transmitting the data of departure marshalling to a fixed marshalling management system to modify the fixed marshalling when the departure marshalling does not conform to the fixed marshalling, checking regular inspection consistency of the modified fixed marshalling, modifying the departure marshalling when the detection of the modified fixed marshalling fails, and comparing the modified departure marshalling with the fixed marshalling until the modified departure marshalling conforms to the fixed marshalling.

In a second aspect, an embodiment of the disclosure provides a system for associating a fixed marshalling with a departure marshalling, including:
a marshalling comparison module, configured to respectively compare data of departure marshalling with data of corresponding fixed marshalling before a shunting plan is executed, after the shunting plane is executed, and before departure to determine whether the departure marshalling conforms to the fixed marshalling, and perform early warning on the departure marshalling, and restrict the departure when the departure marshalling does not conform to the fixed marshalling.

Specifically, the system for associating a fixed marshalling with a departure marshalling further includes:
a marshalling modifying module, configured to transmit a situation of determining whether the departure marshalling conforms to the fixed marshalling to a station management system, transmit the data of the departure marshalling to a fixed marshalling management system to modify the fixed marshalling when the departure marshalling does not conform to the fixed marshalling, check regular inspection consistency of the modified fixed marshalling, modify the departure marshalling when the detection of the modified fixed marshalling fails, and compare the modified departure marshalling with the fixed marshalling until the modified departure marshalling conforms to the fixed marshalling.

Based on the same inventive concept, an embodiment of the disclosure further provides electronic equipment, including a memory, a processor, and a computer program stored on the memory and operated on the processor. The processor, when executing the computer program, can implement the method for associating a fixed marshalling with a departure marshalling above.

Based on the same inventive concept, an embodiment of the disclosure further provides a computer storage medium. A computer executable instruction is stored in the computer storage medium, and the computer executable instruction, when executed, can implement the method for associating a fixed marshalling with a departure marshalling above.

The technical solution provided by the embodiments of the disclosure at least includes the following beneficial effects:
By receiving the departure marshalling and the fixed marshalling and automatically comparing the same, whether the departure marshalling conforms to the fixed marshalling is determined. For the situation that the departure marshalling does not conform to the fixed marshalling, an early warning is given, and departure is restricted. For a situation that there is no automatic comparison means at the present station, automatic comparison can be achieved by the disclosure, thus accurately determining whether the departure marshaling conforms to the fixed marshaling , improving the operation efficiency, effectively preventing errors and careless omissions, improving the operation efficiency, reducing the labor intensity, facilitating the improvement of the train marshalling, ensuring the safety of the train, improving the automatic train management level, assisting operators to improve the quality of fixed marshaling management, and further improving the transportation efficiency. In some specific embodiments, a reason for non-conformity and the specific vehicle number are displayed, which is convenient for adjusting the fixed marshalling or the departure marshalling.

Other features and advantages of the disclosure will be set forth in the following description, and will be apparent in part from the specification, or may be learned by implementing the disclosure. The objectives and other advantages of the disclosure may be implemented and acquired from the structure pointed out in the specification, claims and accompanying drawings.

The technical solution of the disclosure is further described below in detail with reference to accompanying drawings and embodiments.

### BRIEF DESCRIPTION OF THE DRAWINGS

The accompanying drawings, which constitute a part of the specification, are used to provide a further understanding of the disclosure, and used to explain the disclosure together with the embodiments of the disclosure, and thus do not constitute a limitation of the disclosure. In the drawings: In the drawings:
FIG. 1 is a flow diagram of a method for associating a fixed marshalling with a departure marshalling according to an embodiment of the disclosure;
FIG. 2 is a specific flow diagram of a method for associating a fixed marshalling with a departure marshalling according to an embodiment of the disclosure;
FIG. 3 is a structural diagram of electronic equipment according to an embodiment of the disclosure.

### DETAILED DESCRIPTION

Various exemplary embodiments of the disclosure are described below more detailed with reference to accompanying drawings. Although the exemplary embodiments of the disclosure are shown in the accompanying drawings, it should be understood that the disclosure can be implemented in various forms and should not be limited by the embodiments set forth herein. Rather, these embodiments are provided for a more thorough understanding of the disclosure, and will fully convey the scope of the disclosure to those skilled in the art.

In order to solve the problems in the prior art, an embodiment of the disclosure provides a method and system for associating a fixed marshalling with a departure marshalling, electronic equipment, and a storage medium.

### Embodiment 1

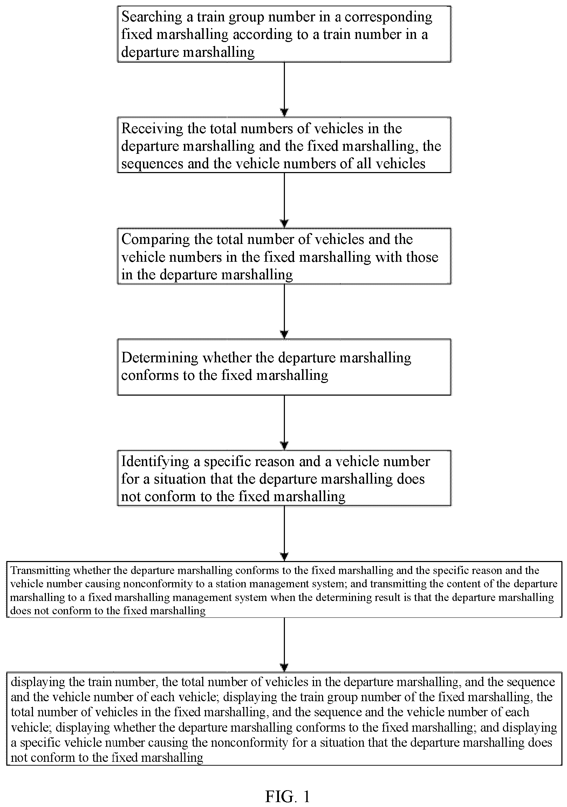

In a first aspect, Embodiment 1 of the disclosure provides a method for associating a fixed marshalling with a departure marshalling, with a flow diagram shown in FIG. 1, including the following steps.

Step S1. Data of the departure marshalling and data of the corresponding fixed marshalling are respectively compared before a shunting plan is executed to determine whether the departure marshalling conforms to the fixed marshalling is determined; and early warning is performed on the departure marshalling, and the departure is restricted when the departure marshalling does not conform to the fixed marshalling.

Step S2. Data of departure marshalling and data of corresponding fixed marshalling are respectively compared after the shunting plan is executed and before departure to determine whether the departure marshalling conforms to the fixed marshalling is determined; and early warning is performed on the departure marshalling, and the departure is restricted when the departure marshalling does not conform to the fixed marshalling.

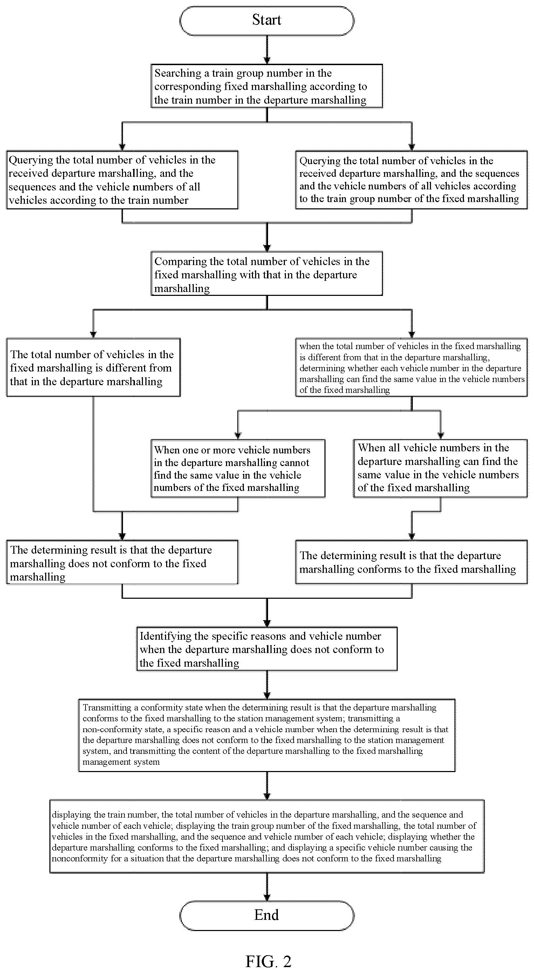

In some specific embodiments, as shown in FIG. 2, the comparing the data of the departure marshalling with the data of the corresponding fixed marshalling to determine whether the departure marshalling conforms to the fixed marshalling in Step S1 and Step S2 includes the following steps: acquiring the data of the departure marshalling, including the total number of vehicles in the departure marshalling, and vehicles numbers of all vehicles; determining the corresponding fixed marshalling according to the departure marshalling; acquiring the data of the fixed marshalling, including the total number of vehicles in the fixed marshalling, and vehicle numbers of all vehicles; comparing the total number of vehicles in the fixed marshalling with that in the departure marshalling, determining that the departure marshalling does not conform to the fixed marshalling when the total number of vehicles is different; determining that the departure marshalling does not conform to the fixed marshalling when the total number of vehicles is the same and at least one vehicle number in the departure marshalling is different from any vehicle number in the fixed marshalling; and determining that the departure marshalling conforms to the fixed marshalling when the total number of the vehicles is the same and all vehicle numbers in the departure marshalling are able to find the same value in the vehicle numbers in the fixed marshalling.

In some specific embodiments, the acquiring the data of the departure marshalling, including the total number of vehicles in the departure marshalling, and vehicle numbers of all vehicles, includes the following step: determining the total number of vehicles in the departure marshalling and a sequence and a vehicle number of each vehicle according to a train number of the departure marshalling.

In some specific embodiments, the determining the corresponding fixed marshalling according to the departure marshalling includes the following step: obtaining a train group number of the corresponding fixed marshalling according to a train group number which includes the train number of the departure marshalling; and determining the corresponding fixed marshalling according to the train group number.

In some specific embodiments, the acquiring the data of the fixed marshalling which comprises the total number of vehicles in the fixed marshalling and vehicle numbers of all vehicles includes the following steps: determining the total number of vehicles in the fixed marshalling and a sequence and a vehicle number of each vehicle according to the train group number of the fixed marshalling.

Step S3. The train number of the departure marshalling, the total number of vehicles, and the sequence and the vehicle number of each vehicle are displayed. The train number of the corresponding fixed marshalling, the total number of vehicles, and the sequence and the vehicle number of each vehicle are displayed. When the departure marshalling does not conform to the fixed marshalling, the vehicle number in the departure marshalling which causes the determination that the departure marshalling does not conform to the fixed marshalling is differentially displayed.

A situation of inconsistent marshalling is taken as an example, the departure marshalling and the fixed marshalling are compared. As shown in Table 1, the reason for non-conformity is highlighted so as to be distinguished from other data.

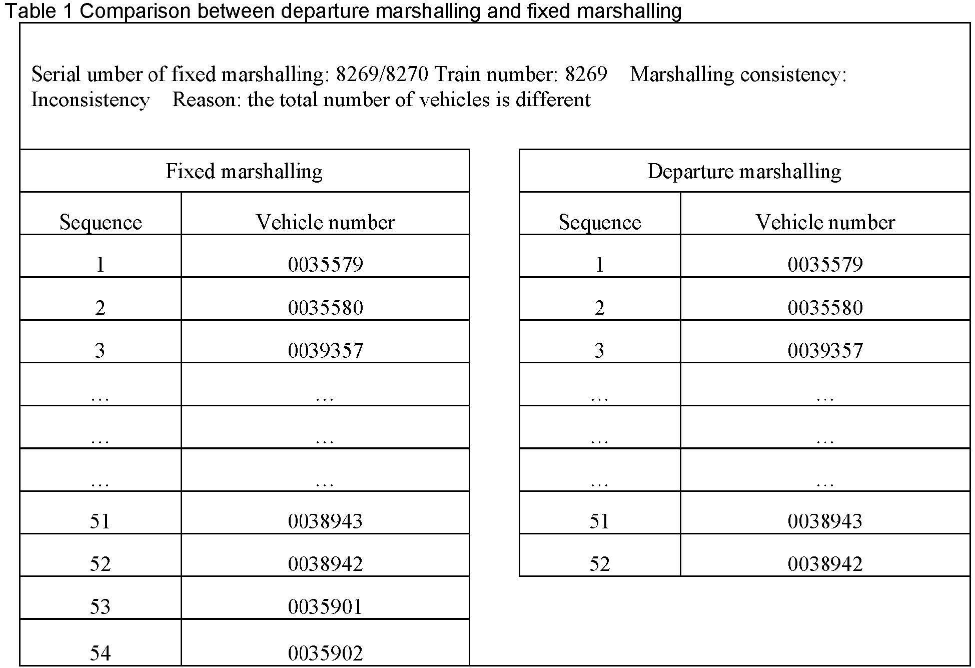

Another situation that the departure marshalling does not conform to the fixed marshalling is taken as an example, the departure marshalling and the fixed marshalling are compared. As shown in Table 2, the reason that the departure marshalling does not conform to the fixed marshalling and the specific vehicle number are highlighted so as to be distinguished from other data.

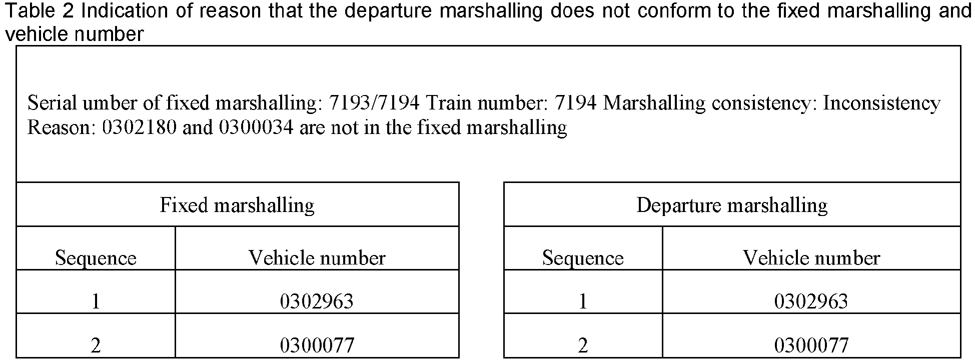

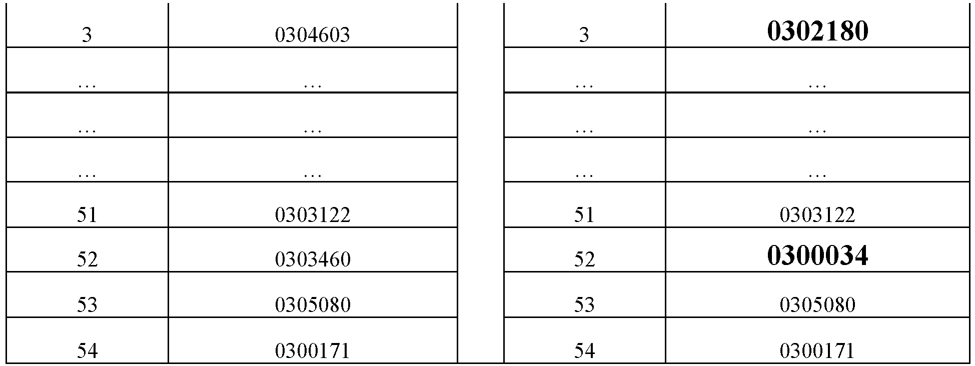

Step S4. A situation of determining whether the departure marshalling conforms to the fixed marshalling is transmitted to a station management system. When the departure marshalling does not conform to the fixed marshalling, the data of the departure marshalling is transmitted to a fixed marshalling management system to modify the fixed marshalling, and regular inspection consistency of the modified fixed marshalling is checked, the departure marshalling is modified when the detection of the modified fixed marshalling fails, and the modified departure marshalling is compared with the fixed marshalling until the modified departure marshalling conforms to the fixed marshalling

In a specific embodiment, the comparison between the fixed marshalling and the departure marshalling is divided into twice. The first time is to compare a pre-generated departure marshalling with the fixed marshalling before the shunting plan is executed, and the second time is to compare a formal departure marshalling with the fixed marshalling after the shunting plan is executed and before the departure. The twice comparisons jointly form an effect of constraining the station operation. By accessing the data of the fixed marshalling and the data of the departure marshalling and comparing the two, an early warning is displayed for the departure marshalling that does not conform to the fixed marshalling. Hence, the transportation enterprises are technically assisted to make management changes, that is, the station, before adjusting the departure marshalling, automatically compares a pre-generated planned departure marshalling with the fixed marshalling. If there are differences, the fixed marshalling is modified in advance and then submitted to a management department for auditing, and the management department controls regular inspection consistency the whole group of vehicles. If the auditing fails, the station needs to modify the planned departure marshalling and submit the modified departure marshalling again, and the departure marshalling can be adjusted as planned only after the auditing is passed. Before the departure, the system needs to automatically check the consistency of the departure marshalling and the fixed marshalling; and if there are differences, the departure is not allowed, thus promoting the station to submit a modifying plan in advance, and change the departure marshalling in strict accordance with the approved plan. Only in this way can the fixed marshalling really play the role of controlling the departure marshalling, ensure the high regular inspection consistency of the heavy-haul train marshalling, reduce the shunting operation during the regular inspection of vehicles in the future from the source, and help improve the transportation efficiency.

In another specific embodiment, the data of a fixed train marshalling is received, including the total number of vehicles in the train set, and vehicle numbers of all vehicles. The data of a departure train marshalling is received, including the total number of vehicles, and vehicle numbers of all vehicles. The total number of vehicles in the fixed marshalling is compared with that in the departure marshalling, and if the total number of vehicles is different, it is determined that the departure marshalling does not conform to the fixed marshalling. If the total number of vehicles is the same, and one or more vehicle numbers in the departure marshalling cannot find the same value in the vehicle numbers in the fixed marshalling, it is determined that the departure marshalling does not conform to the fixed marshalling. If the total number of vehicles is the same, and all vehicle numbers in the departure marshalling can find the same value in the vehicle numbers in the fixed marshalling, it is determined that the departure marshalling conforms to the fixed marshalling. A result of determining whether the departure marshalling conforms to the fixed marshalling is transmitted to a station management system, thus providing the station management system with a decision support for whether to allow the departure. When the departure marshalling does not conform to the fixed marshalling, the content of the departure marshalling is transmitted to a fixed marshalling management system, thus facilitating the fixed marshalling management system to rapidly form a change plan of the fixed marshalling and submit the change plan to the management department for auditing. A train group number in the corresponding fixed marshalling is searched according to the train number in the departure marshalling, and the method includes determining which train group number the train number is included in, thus obtaining the train group number of the fixed marshalling. The total number of vehicles in the departure train marshalling and a sequence and a vehicle number of each vehicle in are obtained by querying according to the train number, which are inquired from the station management system. The total number of vehicles in the train set, and the sequence and the vehicle number of each vehicle are obtained by querying according to the train group number of the fixed marshalling, which are inquired from a vehicle fixed marshalling management system. The train number, the total number of vehicles in the departure marshalling and the sequence and the vehicle number of each vehicle are displayed. The train group number of the fixed marshalling, the total number of vehicles in the fixed marshalling and the sequence and vehicle number of each vehicle are displayed. Whether the departure marshalling conforms to the fixed marshalling is displayed according to a determining result above. For a situation that the departure marshalling does not conform to the fixed marshalling, the specific vehicle number causing the non-conformity is displayed.

In another specific embodiment, the train group number in the corresponding fixed marshalling is searched according to the train number in the departure marshalling, and the method includes determining which train group number the train number is included in, thus obtaining the train group number of the fixed marshalling. The data of the fixed train marshalling is received, including the total number of vehicles in the train set, and sequences and vehicle numbers of all vehicles, which are inquired from the fixed marshalling management system. The data of the departure train marshalling is received, including the total number of vehicles, and sequences and vehicle numbers of all vehicles, which are inquired from the station management system. The total number of vehicles in the departure marshalling is compared with that in the fixed marshalling. Each vehicle number in the departure marshalling is compared with the vehicle number in the fixed marshalling. Whether the total number of vehicles in the departure marshalling is equal to that in the fixed marshalling is determined, and whether each vehicle number in the departure marshalling can find the same value in the vehicle number in the fixed marshalling. A specific reason and vehicle number for a situation that the departure marshalling does not conform to the fixed marshalling is identified. A conformity state when the determining result is that the departure marshalling conforms to the fixed marshalling is transmitted to the station management system. A non-conformity state, a specific reason and a vehicle number when the determining result is that the departure marshalling does not conform to the fixed marshalling are transmitted to the station management system, and the content of the departure marshalling is transmitted to the fixed marshalling management system, thus facilitating the fixed marshalling management system to rapidly form a change plan of the fixed marshalling and submit the change plan to the management department for auditing. The train number, the total number of vehicles in the departure marshalling and the sequence and vehicle number of each vehicle are displayed. The train group number of the fixed marshalling, the total number of vehicles in the fixed marshalling and the sequence and vehicle number of each vehicle are displayed. Whether the departure marshalling conforms to the fixed marshalling is displayed according to a determining result above. For a situation that the departure marshalling does not conform to the fixed marshalling, the specific vehicle number causing the non-conformity is displayed.

In the above method of this embodiment, by receiving the departure marshalling and the fixed marshalling and automatically comparing the same for twice, an effect of constraining the station operation is jointly formed, whether the departure marshalling conforms to the fixed marshalling is determined. For the situation that the departure marshalling does not conform to the fixed marshalling, an early warning is given, and departure is restricted. For a situation that there is no automatic comparison means at the present station, automatic comparison can be achieved by the disclosure, thus accurately determining whether the departure marshaling conforms to the fixed marshaling , improving the operation efficiency, effectively preventing errors and careless omissions, improving the operation efficiency, reducing the labor intensity, facilitating the improvement of the train marshalling, ensuring the safety of the train, improving the automatic train management level, assisting operators to improve the quality of fixed marshaling management, and further improving the transportation efficiency. In some specific embodiments, a reason for non-conformity and the specific vehicle number are displayed, which is convenient for adjusting the fixed marshalling or the departure marshalling.

Those skilled in the art can change the above order without departing from the scope of protection of the disclosure.

### Embodiment 2

Embodiment 2 of the disclosure provides a system for associating a fixed marshalling with a departure marshalling, including:
a marshalling comparison module, configured to respectively compare data of departure marshalling with data of corresponding fixed marshalling before a shunting plan is executed, after the shunting plane is executed, and before departure to determine whether the departure marshalling conforms to the fixed marshalling, and perform early warning on the departure marshalling, and restrict the departure when the departure marshalling does not conform to the fixed marshalling.

Specifically, the system for associating a fixed marshalling with a departure marshalling further includes:
a marshalling modifying module, configured to transmit a situation of determining whether the departure marshalling conforms to the fixed marshalling to a station management system, transmit the data of the departure marshalling to a fixed marshalling management system to modify the fixed marshalling when the departure marshalling does not conform to the fixed marshalling, check regular inspection consistency of the modified fixed marshalling, modify the departure marshalling when the detection of the modified fixed marshalling fails, and compare the modified departure marshalling with the fixed marshalling until the modified departure marshalling conforms to the fixed marshalling.

About the system in the above embodiment, the specific way in which each module performs operation has been described in detail in the embodiment of the method, and thus will not be described in detail here.

In the embodiment, by receiving the departure marshalling and the fixed marshalling and automatically comparing the same for twice, an effect of constraining the station operation is jointly formed, whether the departure marshalling conforms to the fixed marshalling is determined. For the situation that the departure marshalling does not conform to the fixed marshalling, an early warning is given, and departure is restricted. For a situation that there is no automatic comparison means at the present station, automatic comparison can be achieved by the disclosure, thus accurately determining whether the departure marshaling conforms to the fixed marshaling , improving the operation efficiency, effectively preventing errors and careless omissions, improving the operation efficiency, reducing the labor intensity, facilitating the improvement of the train marshalling, ensuring the safety of the train, improving the automatic train management level, assisting operators to improve the quality of fixed marshaling management, and further improving the transportation efficiency. In some specific embodiments, a reason for non-conformity and the specific vehicle number are displayed, which is convenient for adjusting the fixed marshalling or the departure marshalling.

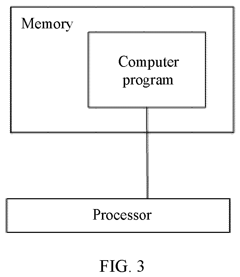

Based on the same inventive concept, an embodiment of the disclosure further provides electronic equipment with a structure shown in FIG. 3, including a memory, a processor, and a computer program stored on the memory and operated on the processor. The processor, when executing the computer program, can implement the method for associating a fixed marshalling with a departure marshalling above.

Based on the same inventive concept, an embodiment of the disclosure further provides a computer storage medium. A computer executable instruction is stored in the computer storage medium, and the computer executable instruction, when executed, can implement the method for associating a fixed marshalling with a departure marshalling above.

Any modification, supplement, equivalent substitution, etc. made within the principle scope of the disclosure should be included in the scope of protection of the patent of the disclosure.

## Claims

1. A method for associating a fixed marshalling with a departure marshalling, comprising the following steps:
respectively comparing data of the departure marshalling with data of the corresponding fixed marshalling before a shunting plan is executed, after the shunting plane is executed, and before departure to determine whether the departure marshalling conforms to the fixed marshalling; and performing early warning on the departure marshalling, and restricting the departure when the departure marshalling does not conform to the fixed marshalling.

2. The method according to claim 1, **characterized in that** the comparing data of the departure marshalling with data of the corresponding fixed marshalling to determine whether the departure marshalling conforms to the fixed marshalling comprises the following steps:
acquiring the data of the departure marshalling, comprising the total number of vehicles in the departure marshalling, and vehicle numbers of all vehicles;
determining corresponding fixed marshalling according to the departure marshalling;
acquiring the data of the fixed marshalling, comprising the total number of vehicles in the fixed marshalling, and vehicle numbers of all vehicles; and
comparing the total number of vehicles in the fixed marshalling with that in the departure marshalling, determining that the departure marshalling does not conform to the fixed marshalling when the total number of vehicles is different; determining that the departure marshalling does not conform to the fixed marshalling when the total number of vehicles is the same and at least one vehicle number in the departure marshalling is different from any vehicle number in the fixed marshalling; and determining that the departure marshalling conforms to the fixed marshalling when the total number of the vehicles is the same and all vehicle numbers in the departure marshalling are able to find the same value in the vehicle numbers in the fixed marshalling.

3. The method according to claim 2, **characterized in that** the acquiring the data of the departure marshalling, comprising the total number of vehicles in the departure marshalling and vehicle numbers of all vehicles, comprises the following step:
determining the total number of vehicles in the departure marshalling, and a sequence and a vehicle number of each vehicle according to a train number of the departure marshalling.

4. The method according to claim 2, **characterized in that** the determining the corresponding fixed marshalling according to the departure marshalling comprises the following steps:
obtaining a train group number of the corresponding fixed marshalling according to a train group number which comprises the train number of the departure marshalling; and
determining the corresponding fixed marshalling according to the train group number.

5. The method according to claim 2, **characterized in that** the acquiring the data of the fixed marshalling, comprising the total number of vehicles in the fixed marshalling and vehicle numbers of all vehicles, comprises the following step:
determining the total number of vehicles in the fixed marshalling, and a sequence and a vehicle number of each vehicle according to the train group number of the fixed marshalling.

6. The method according to claim 1, comprising displaying the train number of the departure marshalling, the total number of vehicles, and the sequence and the vehicle number of each vehicle; displaying the train number of the corresponding fixed marshalling, the total number of vehicles, and the sequence and the vehicle number of each vehicle; and
when the departure marshalling does not conform to the fixed marshalling, differentially displaying the vehicle number in the departure marshalling which causes the determination that the departure marshalling does not conform to the fixed marshalling.

7. The method according to any one of claims 1 to 6, **characterized in that** the method for associating a fixed marshalling with a departure marshalling further comprises the following steps:
transmitting a situation of determining whether the departure marshalling conforms to the fixed marshalling to a station management system;
transmitting the data of the departure marshalling to a fixed marshalling management system to modify the fixed marshalling when the departure marshalling does not conform to the fixed marshalling, checking regular inspection consistency of the modified fixed marshalling, modifying the departure marshalling when the detection of the modified fixed marshalling fails, and comparing the modified departure marshalling with the fixed marshalling until the modified departure marshalling conforms to the fixed marshalling.

8. A system for associating a fixed marshalling with a departure marshalling, comprising:
a marshalling comparison module, configured to respectively compare data of departure marshalling with data of corresponding fixed marshalling before a shunting plan is executed, after the shunting plane is executed, and before departure to determine whether the departure marshalling conforms to the fixed marshalling, and perform early warning on the departure marshalling, and restrict the departure when the departure marshalling does not conform to the fixed marshalling.

9. The system for associating a fixed marshalling with a departure marshalling according to claim 8, further comprising:
a marshalling modifying module, configured to transmit a situation of determining whether the departure marshalling conforms to a fixed marshalling to a station management system, transmit the data of the departure marshalling to a fixed marshalling management system to modify the fixed marshalling when the departure marshalling does not conform to the fixed marshalling, check regular inspection consistency of the modified fixed marshalling, modify the departure marshalling when the detection of the modified fixed marshalling fails, and compare the modified departure marshalling with the fixed marshalling until the modified departure marshalling conforms to the fixed marshalling.

10. Electronic equipment, comprising a memory, a processor, and a computer program stored on the memory and operated on the processor, **characterized in that** the processor, when executing the computer program, is able to implement the method for associating a fixed marshalling with a departure marshalling according to any one of claims 1 to 7.

11. A computer storage medium, **characterized in that** a computer executable instruction is stored in the computer storage medium, and the computer executable instruction, when executed, is able to implement the method for associating a fixed marshalling with a departure marshalling according to any one of claims 1 to 7.
